# EUROPÄISCHE PATENTANMELDUNG

(11) **EP 1 312 906 A2**
(43) Veröffentlichungstag der Anmeldung: **21.05.2003**
(21) Anmeldenummer: 02022885.4
(22) Anmeldetag: 14.10.2002
(51) Int. Cl.: G01L 1/22, G01L 3/10, G01L 5/22

(54) **Mechanisch-elektrischer Wandler**

(30) Priorität: 15.11.2001 DE 10156160
(71) Anmelder: SIEMENS AKTIENGESELLSCHAFT, 80333 München (DE)
(72) Erfinder: Jausel, Heiko, 67434 Neustadt an der Weinstrasse (DE); Mattmann, Erich, 55262 Heidesheim (DE); Neumann-Henneberg, Uwe, 60316 Frankfurt (DE)

(57) **Zusammenfassung**

Die Erfindung betrifft einen mechanisch-elektrischen Wandler, welcher eine Brückenschaltung aufweist, die auf einer Isolationsschicht (2) durch eine elektrische Verschaltung von dehnungsempfindlichen Dickschichtwiderständen (3 bis 6) mittels Leiterbahnen (7 bis 10) gebildet ist, wobei die Isolationsschicht (2) unmittelbar auf einem mechanisch zu belastenden metallischen Bauteil (1) angeordnet und über einen thermischen Prozess innig mit diesem verbunden ist, wobei bei mechanischer Beanspruchung des Bauteils (1) ein der Dehnung der Dickschichtwiderstände (3 bis 6) entsprechendes elektrisches Signal abnehmbar ist.

Damit der mechanisch-elektrischen Wandler bei mechanischer Belastung einen geringen elektrischen Offset im Ausgangssignal zeigt, besteht das zu belastende metallische Bauteil (1) aus einem thermisch nachhärtenden Metall oder einer thermisch nachhärtenden Metalllegierung.

## Beschreibung

Die Erfindung betrifft einen mechanisch-elektrischen Wandler, welcher eine Brückenschaltung aufweist, die auf einer Isolationsschicht durch eine elektrische Verschaltung von dehnungsempfindlichen Dickschichtwiderständen mittels Leiterbahnen gebildet ist, wobei die Isolationsschicht unmittelbar auf einem mechanisch zu belastenden metallischen Bauteil angeordnet und über einen thermischen Prozess innig mit diesem verbunden ist, wobei bei mechanischer Beanspruchung des Bauteils ein der Dehnung der Dickschichtwiderstände entsprechendes elektrisches Signal abnehmbar ist.

Aus der deutschen Patentanmeldung DE 198 14 261 A1 ist ein gattungsgemäßer mechanisch-elektrischer Wandler bekannt. Bei diesem Wandler sind die dehnungsempfindlichen Dickschichtwiderstände auf einer Isolationsschicht angeordnet, die wiederum unmittelbar auf einer als Trägerelement ausgebildeten Welle aus Metall angeordnet ist. Die Welle ist dabei einer mechanischen Belastung in Form einer Torsion ausgesetzt, wobei die daraus resultierende Flächendehnung durch den ohne mechanischen Zwischenträger auf diese Welle angeordneten Widerstand abgegriffen wird. Die Isolationsschicht ist dabei in Drucktechnik in Form eines Dickschichtpaste auf der Welle aufgebracht und nach einer Wärmebehandlung mit dieser innig verbunden. Solche Sensoren zeigen im Ausgangssignal einen Offset, der mit einer aufwendigen elektronischen Schaltung korrigiert werden muss, um ein genaues, der am Träger angreifenden Kraft entsprechendes Signal zu erhalten.

Der Erfindung liegt somit die Aufgabe zugrunde, einen mechanisch-elektrischen Wandler anzugeben, welcher bei mechanischer Belastung einen geringen elektrischen Offset im Ausgangssignal zeigt.

Erfindungsgemäß wird die Aufgabe dadurch gelöst, dass das zu belastende metallische Bauteil aus einem thermisch nachhärtenden Metall oder einer thermisch nachhärtenden Metalllegierung besteht.

Die Erfindung hat den Vorteil, dass das thermisch nachhärtende Metall oder die thermisch nachhärtende Metalllegierung, welches für den Sensor eingesetzt werden soll, während thermischer Prozesse eine Materialgefügeveränderung erfährt, die seine Elastizität, Härte, mechanische Dehngrenze und Dauerfestigkeit entscheidend verbessert. Plastische Verformungen des Metalls oder der Metalllegierung werden bei zweckgemäßer mechanischer Belastung vermieden. Die verbesserte Elastizität des metallischen Bauteils nach der thermischen Härtung begründet eine geringere Biegehysterese, was zu einer entscheidenden Verminderung des Offsets im Ausgangssignal des Sensors führt. Durch die in den thermischen Prozessen erhöhte Härte und Dehngrenze des metallischen Bauteils, ist die Verwendung von dünneren und damit leichteren und kostengünstigeren Metallträgern möglich.
In Folge der erhöhten Härte wird der Einsatz von Stählen mit einer Dicke von weniger als 6 mm möglich. Diese Stähle stehen als gewalzte Bänder zur Verfügung, was eine deutliche Vereinfachung des Produktionsprozesses und eine Verbesserung der Qualität der gefertigten Metallträger zur Folge hat.

In einer vorteilhaften Ausgestaltung der Erfindung wird das thermisch nachhärtende Metall oder die thermisch nachhärtende Metalllegierung bei einer Temperatur von 600°C bis 1100°C gehärtet. Besonders vorteilhaft hierbei ist, dass das Metallbauteil unter den selben thermischen Prozessparametern gehärtet wird, die auch zum Versintern der Dickschichten verwendet werden, wodurch auf zusätzliche Prozessschritte verzichtet werden kann.

In einer weiteren Ausgestaltung ist die Isolationsschicht auf ein bereits thermisch gehärtetes, thermisch nachhärtendes Metall oder eine bereits thermisch gehärtete, thermisch nachhärtende Metalllegierung aufgebracht. Die Vorhärtung des thermisch nachhärtenden Metalls oder der thermisch nachhärtenden Metalllegierung erfolgt an Luft, was eine Oxydation der Metall- oder Legierungsoberfläche zur Folge hat und eine bessere innige Verbindung der Isolationsschicht mit der Metall- oder Legierungsoberfläche erlaubt. Vor allem die hierbei erzeugten Aluminium- und Chromoxyde auf der Metall- oder Legierungsoberfläche stellen die feste chemischen Anbindung zu der Siliziumoxyde enthaltenden Isolationsschicht sicher.

In weiteren Ausführungsformen wird die Isolationsschicht alternativ als pastenartige Glasfritte ausgebildet, welche mit Oxydbrücken an das metallische Bauteil über seine Oxydschicht gebunden ist oder als Folie ausgebildet ist, die eine Glasfritte enthält, welche mit Oxydbrücken an das metallische Bauteil über seine Oxydschicht gebunden ist. Die pastenartige Isolationsschicht wird in Siebdrucktechnik auf die Metalloberflächen aufgetragen und in dem bekannten thermischen Prozess versintert, wobei die Siliziumoxydbestandteile der Glasfritte eine innige Verbindung in Form von Oxydbrücken mit der Oberflächenoxydschicht des metallischen Bauteils bilden. Hierdurch wird eine langlebige und den mechanischen Beanspruchungen gewachsenen Verbindung der ersten Dickschicht zum metallischen Bauteil gewährleistet.
Wird die Isolationsschicht als Folie ausgebildet, können zunächst weitere Dickschichtfilme auf die Folie aufgetragen werden, wonach die die Dickschichten tragende Folie auf das metallische Bauteil aufgelegt wird und das System aus Isolationsschicht, Widerstandsschicht und Leiterbahnschicht in einem thermischen Prozess versintert wird. Unter dem Einfluss der hohen Temperatur gasen die Harzbestandteile der Folie nahezu vollständig aus und es bleiben die Glasbestandteile zurück, die in der bekannten Weise an die oxydierte Metalloberfläche anbinden. Auch bei diesem thermischen Vorgang erfolgt die gewünschte Materialgefügeänderung des metallischen Bauteils.

Bei einer vorteilhaften Ausgestaltung ist das ungehärtete, thermisch nachhärtende Metall oder die thermisch nachhärtende Metalllegierung kaltschlagfest. Hierdurch ist eine gute mechanische Bearbeitbarkeit des metallischen Rohlings vor den thermischen Behandlungen gewährleistet. Bei kaltschlagfesten Metallen oder Metalllegierungen bilden sich bei großtechnisch üblichen mechanischen Formgebungsverfahren, wie zum Beispiel dem Kaltstanzen, keine oder nur wenige Mikrorisse im Material, was eine höhere Qualität des metallischen Bauteils nach der mechanischen Bearbeitung zur Folge hat.

In einer Weiterbildung weist das zu belastende Bauteil auf seiner Oberfläche mindestens eine Ausnehmung auf, welche bei mechanischer Beanspruchung des zu belastenden Bauteils ein betragsmäßig ungleiches Verhältnis der beiden Hauptdehnungen erzeugt, wobei die Dickschichtwiderstände in radialer Richtung zu der mindestens einen Ausnehmung angeordnet sind. Die bei mechanischer Beanspruchung des Sensors erzeugten betragsmäßig ungleichen Hauptdehnungen des Metallträgers verursachen ungleiche Flächendehnungen in den Dickschichtwiderständen, was eine ungleiche Widerstandsänderung zur Folge hat und woraus ein gut messbares und ausreichend großes Signal, der aus den besagten Widerständen verschalteten Messbrücke, gewonnen wird.

In einer weiteren Ausgestaltung ist die mindestens eine Ausnehmung als Langloch, Kreis oder Halbkreis ausgebildet, wobei die Dickschichtwiderstände in der Nähe der radialen Bereiche der mindestens einen Ausnehmung angeordnet sind. Hierdurch tritt eine besonders starke ungleiche Flächendehnung in den Dickschichtwiderständen auf, was ein besonders hohes Messsignal zur Folge hat, das ohne aufwendige Verstärkung direkt von der nachfolgenden Elektronik verarbeitet werden kann. Derartige mechanisch-elektrische Wandler können beispielsweise als Torsionssensoren in elektrisch unterstützten Kraftfahrzeuglenksystemen eingesetzt werde.

Die Erfindung lässt zahlreiche Ausführungsformen zu. Eine davon soll anhand der in der Zeichnung dargestellten Figuren erläutert werden.
- Figur 1:: Draufsicht auf einen erfindungsgemäßen mechanischelektrischen Wandler.
- Figur 2:: Erfindungsgemäßer mechanisch-elektrischen Wandler im Schnitt
- Figur 3:: Erfindungsgemäßer mechanisch-elektrischen Wandler mit Multilayerstruktur im Schnitt

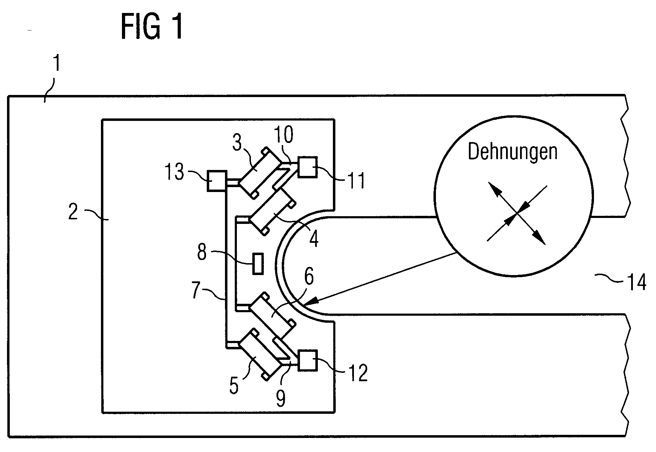

In Fig. 1 ist ein erfindungsgemäßer mechanisch-elektrischer Wandler für die Anwendung in Lenkhilfesystemen in Kraftfahrzeugen dargestellt. Auf einer auf Torsion zu belastenden Welle 1, welche aus einem thermisch nachhärtenden Metall oder einer thermisch nachhärtenden Metalllegierung besteht und quaderförmig ausgebildet ist, ist eine Isolationsschicht 2 angeordnet. Auf der Isolationsschicht 2 ist eine Widerstandsbrücke angeordnet, welche aus dehnungsempfindlichen Dickschichtwiderständen 3 bis 6 besteht. Die Dickschichtwiderstände 3 bis 6 sind durch Leiterbahnen 7 bis 10 elektrisch zu einer Widerstandsmessbrücke verbunden. Zum Abgriff der elektrischen Signale der Widerstandsmessbrücke und zu deren Weiterleitung an eine elektronische Auswerteschaltung können Kontaktstellen 11 bis 13 vorgesehen sein. Alternativ können die Signale auch über weitere Leiterbahnen direkt einer auf der Dickschicht angeordneten elektronischen Schaltung zugeführt werden, die hier nicht weiter dargestellt ist. Um eine maximale Flächendehnung in den Dickschichtwiderständen 3 bis 6 zu erhalten, werden durchgängige Ausnehmungen 14 in das metallische Bauteil eingebracht. Hier ist eine Ausnehmung 14 in Form eines Langlochs dargestellt, es sind aber runde, halbrunde, und mindestens dreieckige Ausnehmungen vorteilhaft einsetzbar.

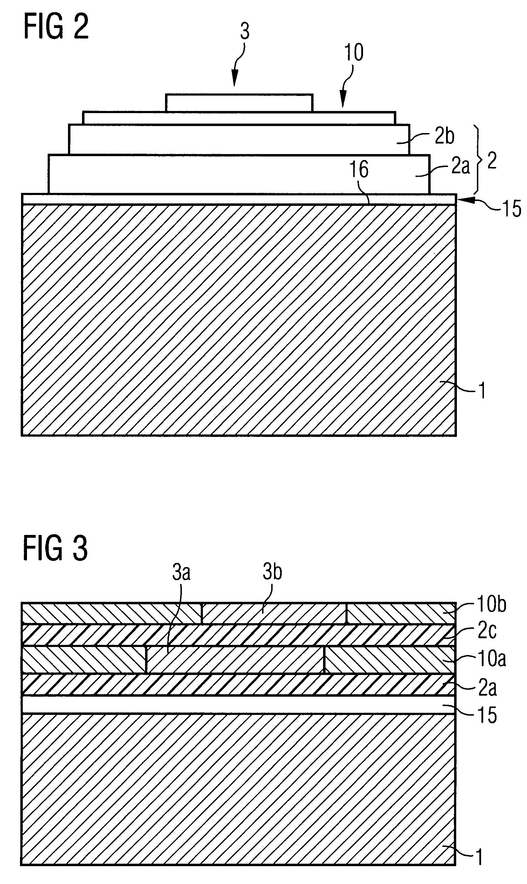

Fig. 2 zeigt einen Schnitt durch einen erfindungsgemäßen mechanisch-elektrischen Wandler. Ein thermisch nachhärtendes Metall oder eine thermisch nachhärtende Metalllegierung 1 ist mit einer oxydierten Oberfläche 15 bedeckt . Auf der oxydierten Metalloberfläche 15 ist mindestens eine Isolationsschicht 2 angeordnet. Diese Isolationsschicht 2 kann als pastenartige Dickschicht oder als Folie ausgebildet sein. Auf die Isolationsschicht 2 sind die Dickschichtwiderstände 3 bis 6 und die die Widerstände verbindenden Leiterbahnen 7 bis 10 in einer Ebene aufgebracht.

Der beschriebene mechanisch-elektrische Wandler wird wie folgt hergestellt. Ein metallisches Material 1 wird zunächst mechanisch bearbeitet, um das Rohmaterial in die für den Sensor notwendige Form zu bringen. Die quaderförmige Gestalt, sowie die runden, halbrunden, langlochförmigen oder mindestens dreieckigen Ausnehmungen 14 werden dem Rohling aufgeprägt. Hierbei sind großtechnische Bearbeitungsverfahren, wie beispielsweise das Kaltstanzen, vorteilhaft, weil sie kostengünstig, schnell und zur Erzeugung hoher Stückzahlen ausführbar sind. Bei der Verwendung thermisch nachhärtender Metalle oder Metalllegierungen zur Herstellung der Sensoren, erfolgt die mechanische Bearbeitung weitgehend frei von Mikrorissen, da die thermisch nachhärtenden Metalle oder Metalllegierungen vor dem ersten thermischen Prozessschritt kaltschlagfest sind.

Im Anschluss an die mechanische Bearbeitung des metallischen Werkstücks erfolgt ein erster thermischer Prozessschritt, der zur Oberflächenvergütung notwendig ist. Hierbei wird das Werkstück von Raumtemperatur in ca. 15 - 25 min. auf etwa 750° - 900° C erwärmt, dann ca. 5 - 15 min unter dem Einfluss dieser Temperatur belassen und dann über eine Zeitraum von 15 - 25 min auf Raumtemperatur abgekühlt. Dieses Temperaturprofil wird auch in allen folgenden thermischen Prozessen beibehalten. Da dieser thermische Prozessschritt an Luft geführt wird, erfolgt im ersten thermischen Prozess eine oxydative Veränderung der Oberfläche 16 des metallischen Bauteils 1. Daraufhin wird eine Isolationsschicht 2a in Form einer Paste aufgebracht und in bekannter Weise versintert. Die Oxydschicht 15 auf der Oberfläche 16 des metallischen Bauteils 1 stellt eine innige Verbindung des Metalls mit der aufgesinterten Isolationsschicht 2 sicher, da vom Metalloxyd 15 des zu belastenden Bauteils 1 zu den Oxyden in der aufzubringenden Isolationsschicht Oxydbrücken gebildet werden. Nötigenfalls kann mindestens eine weitere Isolationsschicht 2b aufgebracht und versintert werden, um die nötige elektrischen Durchschlagsfestigkeit zu erreichen.

Nun erfolgt das Aufbringen einer Paste aus welcher die Widerstände 3 bis 6 geformt werden und einer Paste aus welcher die Leiterbahnen 7 bis 10 geformt werden sowie das erneute versintern im genannten Temperaturschema. Innerhalb dieser ohnehin notwendigen thermischen Prozesse erfährt der thermisch nachhärtende metallische Träger 1 eine Materialgefügeänderung, die sich vorteilhaft auf seine mechanischen Eigenschaften, wie Härte, Dehngrenze, Langzeitfestigkeit und Elastizität auswirkt.

Durch die wiederholte Anwendung der vorbeschriebenen Schritte lässt sich eine komplexe Multilayerarchitektur, wie sie in Figur 3 dargestellt ist, auf dem metallischen Bauteil 1 realisieren.

Alternativ zur Isolationspaste ist die Isolationsschicht 2 auch als Folienschicht realisierbar. Diese dielektrische Folienschicht besteht aus Kunstharzen mit eingemengter Glasfritte. In einem ersten Schritt werden auf dem folienartigen Dielektrikum 2 Leiterbahnen 7 bis 10 und Widerstände 3 bis 6 in Siebdrucktechnik aufgebracht. Danach wird das folienartige Dielektrikum 2 mit der aufgedruckten Struktur nach außen auf das metallische Bauteil 1 aufgelegt und in einem thermischen Prozess versintert. Die thermischen Prozessbedingungen entsprechen denen bei der bereits beschriebene Versinterung der Pasten. Aus dem folienartigen Dielektrikum 2 entweichen unter dem Einfluss der hohen Temperatur die Kunststoffe und die Glasbestandteile verbinden sich mit der zuvor oxydierten Metalloberfläche 15 unter der Bildung der schon erwähnten Oxydbrücken. Die auf dem folienartigen Dielektrikum 2 vorhandenen Pasten werden ebenfalls in diesem Schritt versintert. Das metallische Bauteil 1 erfährt auch bei diesen thermischen Prozessschritten die gewünschte Materialgefügeänderung, die zu den bereits beschriebenen Verbesserungen der mechanischen und elektrischen Eigenschaften des mechanisch-elektrischen Wandlers führen. Diese Technik hat den Vorteil, das nur ein thermischer Prozess zur Oxydation der Metalloberfläche 15 und ein weiterer thermischer Schritt zur Versinterung des Systems aus Isolationsfolie 2, Dickschichtwiderständen 3 bis 6 und Dickschichtleiterbahnen 7 bis 10 notwendig ist.

In Fig. 3 ist ein erfindungsgemäßer mechanisch-elektrischer Wandler mit einer Multilayerstruktur im Schnitt dargestellt. Auch hier ist auf dem Metallträger 1 eine Oxydschicht 15 vorhanden, die in Verbindung mit der ersten Isolationsschicht 2 a steht, auf welcher Widerstände 3a bis 6a und Leiterbahnen 7a bis 10a in Dickschichttechnik aufgebracht sind. Über den ersten Wiederständen 3a bis 6a und Leiterbahnen 7a bis 10 a ist eine weitere Isolationsschicht 2 c aufgebracht, die als pastenartige Dickschicht oder als Folie ausgebildet sein kann. Auf diese Isolationsschicht 2 c werden dann weitere Widerstände 3 b bis 6 b und weitere Leiterbahnen 7 b bis 10 b aufgebracht. Der beschriebene Schichtaufbau kann so lange erfolgen bis technologische oder funktionale Grenzen erreicht werden.

## Patentansprüche

1. Mechanisch-elektrischer Wandler, welcher eine Brückenschaltung aufweist, die auf einer Isolationsschicht durch eine elektrische Verschaltung von dehnungsempfindlichen Dickschichtwiderständen mittels Leiterbahnen gebildet ist, wobei die Isolationsschicht unmittelbar auf einem mechanisch zu belastenden metallischen Bauteil angeordnet und über einen thermischen Prozess innig mit diesem verbunden ist, wobei bei mechanischer Beanspruchung des Bauteils ein der Dehnung der Dickschichtwiderstände entsprechendes elektrisches Signal abnehmbar ist, **dadurch gekennzeichnet, dass** das zu belastende metallische Bauteil (1) aus einem thermisch nachhärtenden Metall oder einer thermisch nachhärtenden Metalllegierung besteht.

2. Mechanisch-elektrischer Wandler nach Anspruch 1, **dadurch gekennzeichnet, dass** das thermisch nachhärtende Metall (1) oder die thermisch nachhärtende Metalllegierung (1) bei einer Temperatur von 600°C bis 1100°C härtbar ist.

3. Mechanisch-elektrischer Wandler nach Anspruch 1 oder 2, **dadurch gekennzeichnet, dass** die Isolationsschicht (2) auf ein bereits thermisch gehärtetes, thermisch nachhärtendes Metall (1) oder eine bereits thermisch gehärtete, thermisch nachhärtende Metalllegierung (1) aufgebracht ist.

4. Mechanisch-elektrischer Wandler nach Anspruch 3, **dadurch gekennzeichnet, dass** die Isolationsschicht (2) als pastenartige Glasfritte ausgebildet ist, welche mit Oxydbrücken an das metallische Bauteil (1) über seine Oxydschicht (15) gebunden ist.

5. Mechanisch-elektrischer Wandler nach Anspruch 3, **dadurch gekennzeichnet, dass** die Isolationsschicht (2) als Folie ausgebildet ist, die eine Glasfritte enthält, welche mit Oxydbrücken an das metallische Bauteil (1) über seine Oxydschicht (15) gebunden ist.

6. Mechanisch-elektrischer Wandler nach Anspruch 1, **dadurch gekennzeichnet, dass** das ungehärtete, thermisch nachhärtende Metall 1 oder die thermisch nachhärtende Metalllegierung (1) kaltschlagfest ist.

7. Mechanisch-elektrischer Wandler nach einem der vorhergehenden Ansprüche, **dadurch gekennzeichnet, dass** das zu belastende Bauteil (1) auf seiner Oberfläche mindestens eine Ausnehmung (14) aufweist, welche bei mechanischer Beanspruchung des zu belastenden Bauteils (1) ein betragsmäßig ungleiches Verhältnis der beiden Hauptdehnungen erzeugt, wobei die Dickschichtwiderstände (3 bis 6) in radialer Richtung zu der mindestens einen Ausnehmung (14) angeordnet sind.

8. Mechanisch-elektrischer Wandler nach Anspruch 7, **dadurch gekennzeichnet, dass** die mindestens eine Ausnehmung (14) als Langloch, Kreis oder Halbkreis ausgebildet ist, wobei die Dickschichtwiderstände (3 bis 6) in der Nähe der radialen Bereiche der mindestens einen Ausnehmung (14) angeordnet sind.
